# FASCICULE DE BREVET EUROPEEN

(11) **EP 1 965 991 B1**
(45) Date de publication et mention de la délivrance du brevet: **27.07.2011**
(21) Numéro de dépôt: 06831093.7
(22) Date de dépôt: 09.11.2006
(51) Int. Cl.: B60B 33/00, B60B 33/02

(54) **ROULETTE POUR MEUBLE OU ANALOGUE**
LAUFROLLE FÜR EIN MÖBELSTÜCK ODER DERGLEICHEN
CASTOR FOR A PIECE OF FURNITURE OR SIMILAR

(30) Priorité: 29.12.2005 FR 0513436
(43) Date de publication de la demande: 10.09.2008
(73) Titulaire: TENTE ROULETTES POLYMERES-BRUANDET, 39700 La Barre (FR)
(72) Inventeur: DAYT, Patrick, F-25000 Besançon (FR)
(74) Mandataire: Flavenot, Bernard
(86) Numéro de dépôt international: PCT/FR2006/002493
(87) Numéro de publication internationale: WO 2007/074221

(56) Documents cités:
- EP-A- 1 527 905
- DE-C1- 19 720 574
- FR-A- 2 622 150
- US-A1- 2003 150 080

## Description

La présente invention concerne les roulettes pour meuble ou analogue comportant un carter constitué d'un carter de roues destiné à supporter et protéger les roues et définissant un premier axe de rotation des roues et d'un carter de pivot destiné à supporter le pivot de liaison du carter de roues avec le meuble et définissant un second axe de pivotement du carter par rapport au meuble, deux roues montées en rotation par rapport au carter de roues via un arbre de rotation selon le premier axe, et des moyens de fixation du carter de pivot sur le meuble. Généralement, de telles roulettes comportent en outre des moyens de blocage en rotation par rapport au meuble sur lequel elles sont montées.

Nombre de telles roulettes trouvent une application particulièrement avantageuse pour aider au déplacement des lits, fauteuils, tables, chariots, etc., en milieu hospitalier ou analogue. Leur structure doit donc être conçue de façon à minimiser au maximum les pièges à poussière ou analogues et à permettre leur lavage intensif à l'aide de produits de nettoyage désinfectants sans endommager leurs éléments contribuant au bon usage de ces roulettes, essentiellement les axes de rotation des roues et du pivot et les moyens de commande du blocage des roulettes par rapport au meuble sur lequel elles sont montées.

Il existe de nombreux types de roulettes qui tendent à atteindre les buts mentionnés ci-dessus mais, en fait, il n'existe pas de roulettes qui aient une structure permettant d'atteindre tous ces buts et qui soient faciles à assembler et à monter sur les meubles.

La présente invention a donc pour but de réaliser une roulette ayant une structure qui tende à répondre aux buts mentionnés ci-dessus.

Plus précisément, la présente invention a pour objet une roulette pour meuble ou analogue, comportant un carter comprenant un carter de roues définissant un premier axe de rotation des roues, ce carter de roues étant destiné à supporter les roues, et un carter de pivot définissant un second axe de pivotement de carter sensiblement perpendiculaire au premier axe, deux roues montées en rotation par rapport au carter de roues via un arbre de rotation selon le premier axe, et des moyens de fixation en rotation du carter de pivot sur le meuble,
caractérisée par le fait que ledit carter est constitué de deux premier et second ensembles, chaque ensemble étant réalisé en une seule pièce,
- ledit premier ensemble comportant une première partie constituée d'une partie du carter de roues et une deuxième partie constituée d'une partie du carter de pivot,
- ledit second ensemble comportant une troisième partie constituée d'une autre partie du carter de roues et une quatrième partie constituée d'une autre partie du carter de pivot,
- les deux ensembles étant aptes à être associés entre eux pour former le carter de façon que les première et troisième parties s'emboîtent pour former le carter de roues et que les deuxième et quatrième parties s'emboîtent pour former le carter de pivot, et
- des moyens pour solidariser entre eux les deux dits ensembles.

D'autres caractéristiques et avantages de l'invention apparaîtront au cours de la description suivante donnée en regard des dessins annexés à titre illustratif mais nullement limitatif, dans lesquels :
La figure 1 représente, en écorché, le schéma de principe d'un mode de réalisation de la roulette selon l'invention, la représentation en traits continus illustrant la roulette non assemblée et la représentation en traits interrompus illustrant la roulette après son assemblage,
La figure 2 représente une vue en coupe schématique de la roulette assemblée en accord avec le schéma selon la figure 1, cette coupe étant référencée II-II sur la figure 1,
Les figures 3 et 4 représentent deux vues en éclaté et en perspective cavalière, d'un mode de réalisation industriel de la roulette selon l'invention, la figure 3 étant une vue en éclaté totale, la figure 4 une vue en éclaté partielle sur laquelle certains des éléments constitutifs de la roulette sont déjà assemblés entre eux,
La Figure 5 est une vue en coupe d'une partie de la roulette selon l'invention en accord avec le mode de réalisation représenté sur les figures 1 à 4, cette partie de roulette correspondant à la partie située à gauche de la ligne Li sur la figure 1,
Les figures 6 et 7 sont deux représentations d'un mode de réalisation de la roulette comportant des moyens de blocage des roues et du pivot, ces moyens de blocage étant représentés sur la figure 6 dans leur position permettant à la roulette de rouler et de pivoter, tandis qu'ils sont représentés sur la figure 7 dans leur position permettant de bloquer la rotation et le pivotement de la roulette, et '
La figure 8 représente un détail d'une réalisation perfectionnée de la roulette selon l'invention permettant la conduction de l'électricité statique.

Il est tout d'abord précisé que, sur les figures, les mêmes références désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

La présente invention concerne une roulette pour meuble M ou analogue, comportant un carter 1 comprenant de façon générale un carter de roues 2 définissant un premier axe 8 de rotation des roues de la roulette qui sont habituellement au nombre de deux, ce carter de roues étant destiné, à la fois, à supporter et protéger les roues, et un carter de pivot 3 définissant un second axe 9 de pivotement de carter sensiblement perpendiculaire au premier axe 8, deux roues 4, 5 montées en rotation par rapport au carter de roues 2 via un arbre de rotation 6 selon le premier axe 8, et des moyens de fixation en rotation 7 du carter de pivot 3 sur le meuble M.

Une telle roulette est plus particulièrement, mais non exclusivement, destinée à être montée sur un meuble pour milieu hospitalier ou analogue, comme un lit, un fauteuil, une table, un chariot, etc.

Selon une caractéristique de l'invention, le carter 1 défini ci-dessus est constitué de deux premier et second ensembles E₁, E₂, chaque ensemble étant réalisé en une seule pièce, par exemple par moulage ou analogue en une matière comme une matière plastique ou analogue.

Le premier ensemble E₁ comporte une première partie 11 constituée d'une partie du carter de roues 2 et une deuxième partie 12 constituée d'une partie du carter de pivot 3, ces première et deuxième parties 11, 12 étant reliées entre elles en 112 pour former l'ensemble E₁ qui est obtenu d'une seule pièce par moulage.

Quant au second ensemble E₂, il comporte une troisième partie 13 constituée d'une autre partie du carter de roues 2 et une quatrième partie 14 constituée d'une autre partie du carter de pivot 3, ces troisième et quatrième parties 13, 14 étant solidarisée entre elles en 134 pour former cet ensemble E₂ qui est obtenu d'une seule pièce par moulage.

Les deux ensembles E₁, E₂ sont configurés pour être aptes à être associés entre eux pour former le carter 1 de façon que les première et troisième parties 11, 13 s'emboîtent pour former le carter de roues 2 et que les deuxième et quatrième parties 12, 14 s'emboîtent pour former le carter de pivot.

La roulette comporte aussi des moyens 15 pour solidariser entre eux les deux ensembles E₁, E₂ après qu'ils aient été emboîtés l'un dans l'autre.

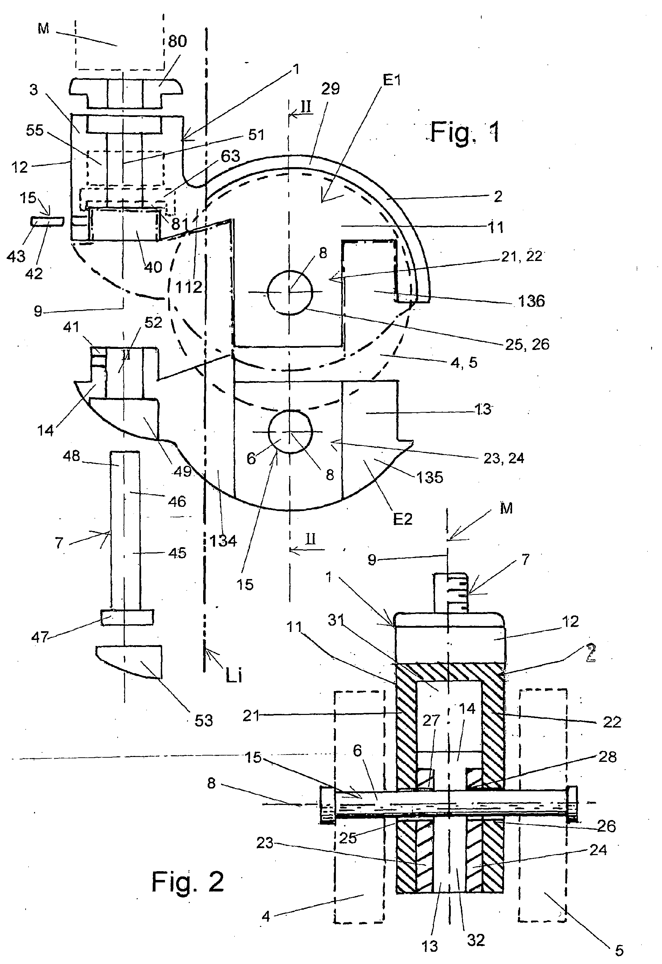

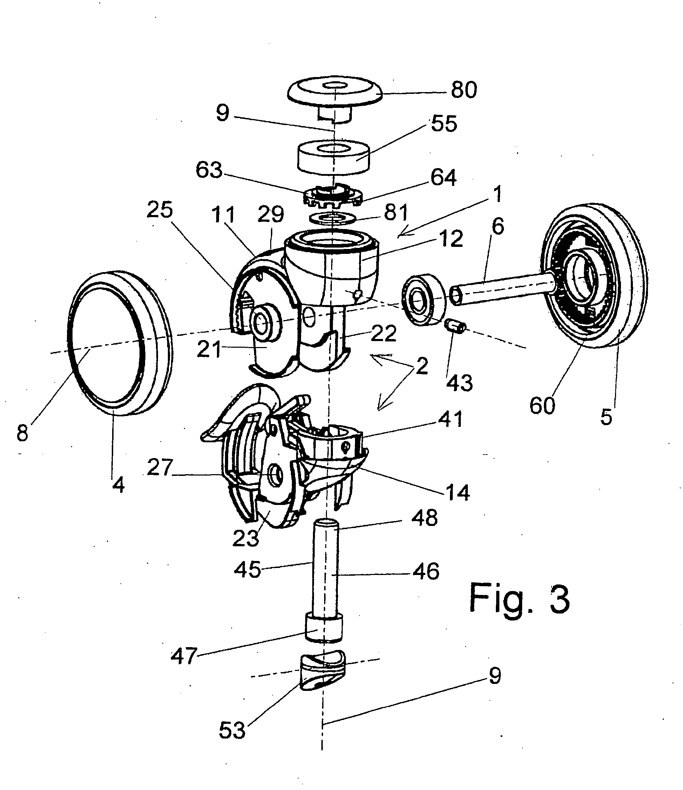

Dans une réalisation avantageuse, comme celle qui est illustrée sur les figures annexées à la présente description, et plus particulièrement sur les figures 2 et 3, la première partie 11 comporte deux première et deuxième parois 21, 22 sensiblement parallèles entre elles en définissant un premier espace 31 en forme sensiblement de "U". Ces première et deuxième parois sont sensiblement perpendiculaires au premier axe 8 et parallèles au second axe 9 et sont solidaires par exemple d'une chape 29 en forme de voûte ayant une forme générale sensiblement demi cylindrique de révolution qui, de façon connue en elle-même, est encadrée par les deux roues 4, 5. Une telle chape 29 est bien connue en elle-même et ne sera donc pas plus amplement décrite ici, dans le seul souci de simplifier la présente description.

Chacune de ces deux parois 21, 22 comporte un orifice 25, 26, les deux orifices étant centrés sur le premier axe 8 et ayant une section complémentaire de la section transversale de l'arbre de rotation 6.

La troisième partie 13 comporte deux troisième et quatrième parois 23, 24 sensiblement parallèles entre elles en définissant un second espace 32 lui aussi en forme sensiblement de "U". Ces troisième et quatrième parois 23, 24 sont reliées en 134 à la quatrième partie 14.

De façon préférentielle, ces troisième et quatrième parois 23, 24 peuvent être bordées chacune, sur leur côté opposé à la liaison 134, par des parois de renfort 135 qui peuvent coopérer avec des logements correspondants 136 réalisés dans la première partie 11, comme illustré et partiellement visible sur la figure 1.

Ces troisième et quatrième parois sont sensiblement perpendiculaires au premier axe 8 et parallèles au second axe 9. Elles sont en outre agencées pour être enfichées dans le premier espace 31 et comportent chacune un orifice 27, 28, ces deux derniers orifices ayant une section sensiblement complémentaire de la section transversale de l'arbre de rotation 6 et étant aptes à être centrés sur le premier axe 8 quand les première et troisième parties sont emboîtées l'une dans l'autre.

De façon avantageuse, l'ensémble des parois 23, 135 et/ou 24, 135 de la troisième partie 13 peut être configuré en première partie de glissière apte à recevoir en translation une deuxième partie de glissière constituée par les première et deuxième parois 21, 22 de la première partie 11. Cette configuration permet d'éviter que les première et troisième parties 11, 13 puissent subir une rotation l'une par rapport à l'autre lorsqu'elles sont emboîtées l'une dans l'autre.

De façon préférentielle, figures 1, 3 et 4, les deuxième et quatrième parties 12, 14 sont emboîtées l'une dans l'autre suivant le second axe 9 via un emboîtement mâle-femelle, la deuxième partie 12 comportant l'élément femelle 40 de l'emboîtement et la quatrième partie 14 comportant l'élément mâle complémentaire 41. La figure 1 représente, en traits continus, la roulette dans une configuration non assemblée, les deux éléments mâle 41 et femelle 40 éloignés l'un de l'autre, et, en une combinaison de traits continus et de traits/points interrompus, cette même roulette en configuration assemblée, c'est-à-dire après que les deux ensembles E₁ et E₂ aient été emboîtés l'un dans l'autre et les deux éléments mâle 41 et femelle 40 enfichés l'un dans l'autre.

Comme mentionné auparavant de façon générique, la roulette comporte en outre des moyens 15 pour solidariser entre eux les deux ensembles E₁, E₂ après qu'il aient été emboîtés l'un dans l'autre. Ces moyens de solidarisation 15 sont avantageusement constitués, d'une part par le fait que l'arbre de rotation 6 passe dans les quatre orifices 25-28 de cette façon qu'il constitue des moyens de goupille entre les première et troisième parties 11, 13, et d'autre part par des moyens 42 pour solidariser entre eux les éléments mâle 41 et femelle 40 de l'emboîtement mâle-femelle entre les deuxième et quatrième parties 12, 14.

Dans cette configuration, l'arbre de rotation 6 et la coopération en glissière des première et troisième parties 11, 13 permettent une parfaite solidarisation de ces deux parties.

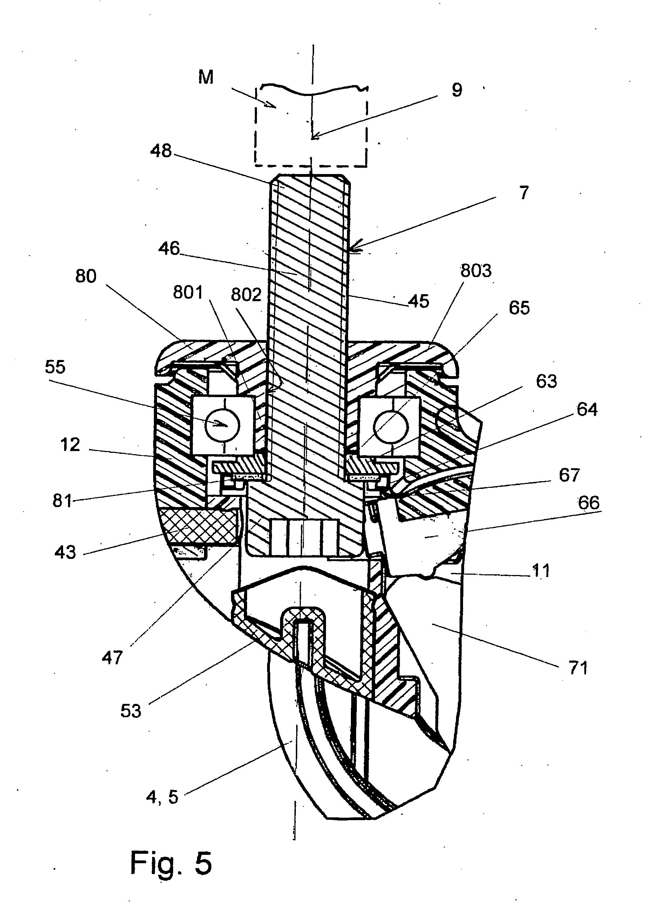

Les moyens 42 pour solidariser entre eux les éléments mâle 41 et femelle 40 sont avantageusement constitués par une goupille 43, par exemple en forme de pion ou analogue, enfichée de préférence en force dans des trous traversant respectivement les deuxième et quatrième parties 12, 14, ces trous étant coaxiaux quand les deux éléments mâle 41 et femelle 40 sont emboîtés l'un dans l'autre, voir plus particulièrement figures 1 et 5.

Quant aux moyens de fixation 7 du carter de pivot 3 sur le meuble M, ils sont constitués par deux percées 51, 52 réalisées suivant le second axe 9 respectivement dans les deuxième et quatrième parties 12, 14, une vis de fixation 45 comportant une tige de vissage 46 et une tête d'épaulement 47 solidaire d'une extrémité de la tige de vissage, cette vis étant apte à être enfichée dans les deux percées 51, 52 de façon que l'extrémité libre 48 de la tige de vissage 46 émerge au-delà de l'extrémité de la percée 51 réalisée dans la deuxième partie 12 la plus éloignée de la quatrième partie 14 (éventuellement au-delà du couvercle 803 du capuchon 80 décrit ci-après), et de façon que la tête d'épaulement 47 soit située dans un alésage 49 réalisé dans la quatrième partie 14 de façon coaxiale à la percée 52 réalisée dans cette quatrième partie.

Cet alésage 49 débouche à l'extrémité de la percée 52 dans la quatrième partie 14 opposée à celle qui est la plus proche de la deuxième partie 12, la profondeur de cet alésage 49 étant supérieure à la hauteur de la tête d'épaulement 47.

Ces moyens de fixation 7 comportent aussi des moyens pour lier en rotation la tige de vissage 46 avec le carter de pivot 3 formé par l'assemblage des deuxième et quatrième parties 12, 14.

De façon préférentielle, les moyens pour lier en rotation la tige de vissage 46 avec le carter de pivot 3 formé par l'assemblage des deuxième et quatrième parties 12, 14 comportent des moyens de roulement 55 montés en coopération avec la deuxième partie 12, ces moyens de roulement étant agencés de façon que le carter de pivot 3 soit apte à pivoter librement par rapport à la tige de vissage 46.

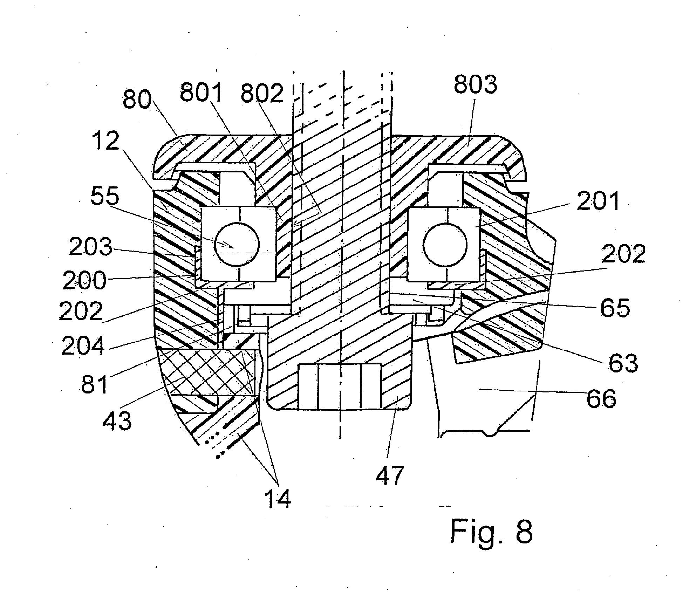

Ces moyens de roulement 55 sont avantageusement constitués d'un roulement à billes, aiguilles ou analogues qui, de façon connue, comporte une cage 201 constituée de deux demi-cages qui, lorsqu'elles sont assemblées, entourent les billes, aiguilles ou analogues, en l'occurrence une première cage dite "extérieure" qui est solidarisée avec la deuxième partie 12 en étant par exemple noyée dans celle-ci au moment de son moulage et en étant centrée sur l'axe 9, et une seconde cage dite "intérieure" qui est traversée par la tige de vissage 46, figure 5, lors du montage, avantageusement via la partie en saillie 801 du capuchon 80 décrit ci-après (figure 8).

Quand les moyens de roulement sont constitués par un roulement du type à billes ou analogues à deux cages comme mentionné ci-dessus, pour lier la tige de vissage 46 avec la cage intérieure du roulement et réaliser l'étanchéité autour de la vis de fixation, la roulette comporte par exemple un capuchon d'étanchéité 80 avantageusement constitué, figure 5, d'un couvercle 803 apte à venir en recouvrement du sommet de la deuxième partie 12, d'une partie en saillie 801 sur le couvercle 803 et d'un orifice central 802 traversant le couvercle 803 et la partie en saillie 801. L'orifice central 802 du capuchon présente une section sensiblement égale, avantageusement légèrement inférieure, à la section transversale de la tige de vissage 46 et la partie en saillie 801 est agencée pour être apte à être enfichée en force entre la tige de vissage 46 et la cage intérieure du roulement afin de réaliser, dans la deuxième partie 12, une fonction d'étanchéité du type "presse-étoupe".

Le couvercle 803 et la partie en saillie 801 du capuchon 80 permettent d'éviter qu'un liquide, pouvant être agressif et corrosif, utilisé lors du nettoyage du sol en milieu hospitalier ne pénètre par ruissellement dans la roulette par la percée 51.

Pour protéger la vis de fixation 45 contre les poussières et autres éléments polluants, la roulette comporte en outre un bouchon 53 d'obturation de l'alésage 49 quand la tête d'épaulement 47 y est positionnée, figure 5.

De façon non obligatoire, mais généralement préférable en fonction des applications de ces roulettes, la roulette selon l'invention comporte des moyens pour bloquer, d'une part la rotation d'au moins une roue 4, 5 par rapport au carter 1, et d'autre part la rotation du carter par rapport à la vis de fixation 45.

Il peut exister de nombreux modes de réalisation de ces moyens de blocage, par exemple comme ceux décrits et illustrés dans le DE 197 20 574.

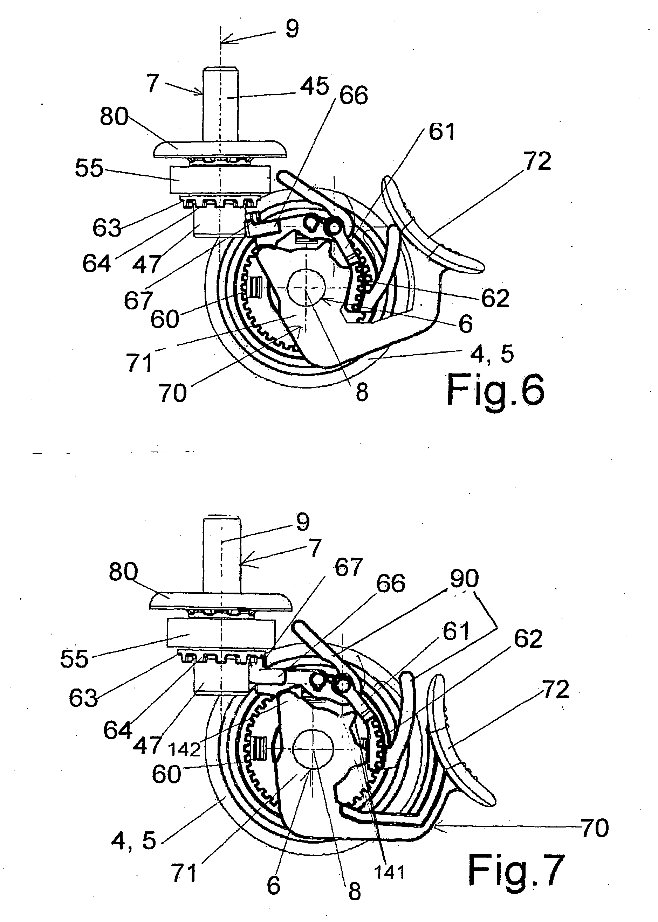

Cependant, dans une réalisation préférentielle, ces moyens pour bloquer, d'une part la rotation d'au moins une roue 4, 5 par rapport au carter 1 et d'autre part la rotation du carter par rapport à la vis de fixation 45, comportent, comme plus particulièrement illustré sur les figures 6 et 7, des premiers crans 60 réalisés sur la roue 4, 5 à bloquer, un premier levier 61 monté rotatif sur la première partie 11, une extrémité du premier levier 61 comportant des seconds crans 62 complémentaires des premiers crans 60, le premier levier étant monté rotatif entre deux première et une seconde positions de façon que, pour une première position, les seconds crans 62 pénètrent dans les premiers crans 60 et que, pour l'autre position, les seconds crans 62 ne coopèrent pas avec les premiers crans 60.

Ces moyens de blocage comprennent en outre une couronne 63 comportant à sa périphérie des troisièmes crans 64, cette couronne étant -montée en coopération de rotation libre avec la deuxième partie 12 de façon coaxiale avec la percée 51 réalisée dans cette deuxième partie 12. Elle comporte un orifice central 65 (figure 5) de façon que la tige de vissage 46 s'y enfiche et y soit bloquée par tous moyens, la couronne étant positionnée en coopération avec la deuxième partie 12 entre les moyens de roulement 55 et la tête d'épaulement 47.

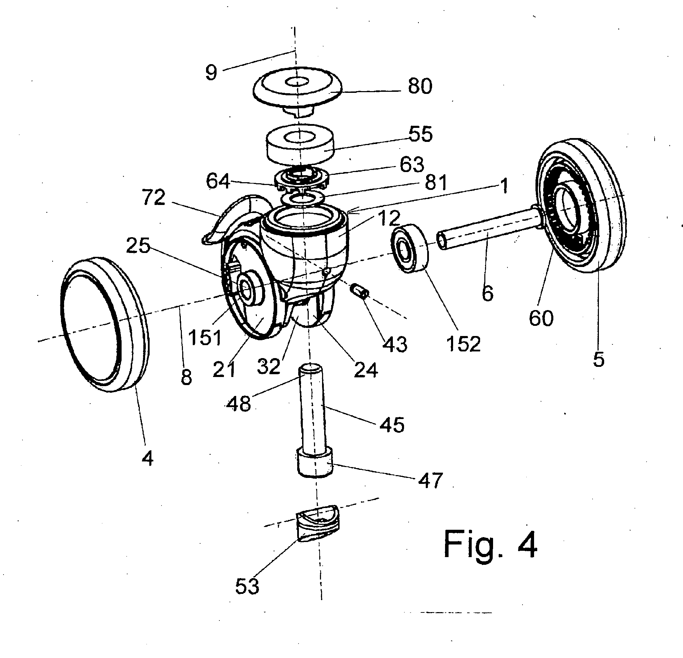

Ils comportent aussi une rondelle d'appui 81 (figures 3 et 4) pour éviter notamment une usure prématurée de la couronne 63, cette rondelle d'appui étant destinée à être interposée entre la couronne 63 et la tête d'épaulement 47, suivant un montage qui sera explicité ci-après.

Les moyens de blocage comportent un second levier 66, une extrémité de ce second levier comportant des quatrièmes crans 67, ce second levier 66 étant monté rotatif entre deux première et seconde positions sur la troisième partie 13 de façon que, pour une première position, les quatrièmes crans 67 pénètrent dans les troisièmes crans 64, et que, pour la seconde position, les quatrièmes crans 67 ne coopèrent pas avec les troisièmes crans 64.

Enfin, les moyens de blocage comportant des moyens 70 pour commander la rotation des deux leviers 61, 66 entre leurs seconde et première positions respectives, et des moyens de rappel commandables des deux leviers, de leur première position vers leur seconde position.

De façon préférentielle, ces moyens 70 pour commander la rotation des premier et second leviers 61, 66 entre leurs seconde et première positions respectives comportent une came 71 munie d'ergots 141, 142 et montée -rotative autour de l'arbre de rotation 6 au moyen d'un orifice traversant, la came étant disposée dans le second espace 32, et des moyens 72 pour commander la rotation de la came 71 de façon qu'elle commande, par le déplacement des ergots 141, 142 la rotation respectivement des premier et second leviers 61, 66 entre leurs seconde et première positions respectives. Quand la came est ramenée dans sa position origine, elle libère les deux leviers qui pourront être ramenés dans leur seconde position comme explicité ci-après.

Il est souligné que, en illustration du fonctionnement de ces moyens de blocage, la figure 6 représente la roulette non bloquée, tandis que la figure 7 la représente en position bloquée, les crans plongeant les uns dans les autres comme mentionné auparavant.

Les moyens de rappel commandables des deux leviers 61, 66, de leur première position vers leur seconde position sont essentiellement constitués de pattes élastiques 90 agissant entre la première partie 11 et respectivement les deux leviers 61, 66 pour tendre à les ramener vers leur seconde position dans laquelle les crans 62 et 67 de ces deux leviers ne coopèrent pas avec les crans 60 et 64 respectivement de la roue 4, 5 et de la couronne crantée 63. Les deux leviers peuvent être ramenés dans leur seconde position quand la came 71 n'agit pas sur eux pour les maintenir dans leur première position.

La roulette selon l'invention est assemblée et se monte sur le meuble M de la façon suivante :
Il est supposé que la roulette est dans une configuration non assemblée, comme illustré sur la figure 3.
Il est tout d'abord procédé à l'assemblage des moyens de blocage décrits ci-dessus, de la façon suivante : le levier 61 est monté sur la première partie 11, avec la patte élastique 90 s'appuyant sur la paroi intérieure de cette première partie 11. Le levier 66 est monté sur la troisième partie 13.

Les ensembles E1 et E2 sont alors assemblés par emboîtement et ainsi la patte 90 du levier 66 vient en appui contre la paroi intérieure de la première partie 11. Puis la came 71 est introduite dans l'espace 32 de la troisième partie 13 entre les deux parois 23 et 24 et positionnée de façon que son orifice traversant soit centré sur l'axe 8 et que les ergots 141, 142 soient aptes à coopérer par glissement respectivement contre les leviers 61, 66 pour les faire pivoter autour de leur axe de rotation respectif.

La roulette est dans une configuration comme illustrée sur la figure 4. La couronne crantée 63 et la rondelle d'appui 81 sont alors introduites, dans cet ordre, dans la percée 51 du côté de l'élément femelle 40, en précisant que la couronne crantée 63 est orientée de façon que ses crans 64 soient aptes à coopérer avec les crans 67 du levier 66 et qu'elle soit positionnée de façon qu'elle vienne en butée avantageusement solidaire contre, ou au moins partiellement dans, la cage interne du roulement 55. De cette façon, cette couronne crantée 63 est située entre cette cage interne des roulements 55 et la rondelle d'appui 81.

A ce stade de l'assemblage, les deux roues sont alors pré-positionnées de part et d'autre du carter de roues 2 et plus particulièrement des deux parois 21, 22, en intercalant éventuellement, comme illustré, des surfaces de roulement en saillie ou analogues 151, 152.

Puis l'arbre de rotation 6 comportant un épaulement à l'une de ses extrémités est passé à travers les orifices 25-28 des parois 21-24, des roulements 151, 152, des paliers des roues 4,5 et l'orifice central de la came 71, l'extrémité non épaulée de l'arbre étant ensuite sertie sur le palier de la roue avec laquelle elle coopère.

La tige de vissage 46 est introduite dans la percée 52 puis dans la percée 51. Elle est ensuite vissée dans le meuble M, en ayant pris soin de placer préalablement le capuchon 80 entre le sommet du carter de pivot 3 et le meuble comme décrit ci-dessus. Le vissage est effectué, par exemple au moyen d'une clé six pans, comme illustré sur la figure 5, apte à coopérer avec la tête d'épaulement 47. La tige de vissage 46 est vissée jusqu'à ce que la tête d'épaulement 47 vienne se loger dans l'alésage 49 et que la roulette soit parfaitement fixée au meuble M.

Lors de son introduction en passant à travers la couronne crantée 63, la tige de vissage 46 vient se solidariser, par exemple en force ou par tout autre moyen, avec cette couronne 63.

De cette façon, lorsque les crans 67 du levier 66 s'engrènent dans les crans 64 de la couronne crantée 63, le carter 1 ne peut pas pivoter par rapport à la tige de vissage 46. Comme la tige de vissage est considérée comme fixe par rapport au meuble- M, le carter 1 de la roulette ne peut pas, non plus, pivoter par rapport au meuble M.

Enfin, le bouchon 53 est enfoncé dans l'alésage 49 pour boucher la percée 52 comme décrit ci-dessus.

Les avantages d'une telle structure de roulette, aussi bien sur le plan de son assemblage et de son montage sur un meuble que pour son utilisation en un milieu comme un milieu hospitalier, apparaissent clairement à la lecture de la présente description, sans qu'il soit nécessaire de les rappeler ici.

Les roulettes selon l'invention comme décrit ci-dessus sont destinées à supporter et à faire rouler des meubles qui, dans certains -domaines, sont susceptibles de se charger en électricité statique.

Pour éviter tout incident ou accident dû à cette électricité statique, il est nécessaire de relier électriquement ces meubles à la masse. L'un des moyens pour obtenir cette liaison est d'utiliser les roulettes en les rendant électriquement conductrices puisqu'elles sont toujours au contact du sol qui constitue la masse.

La roulette selon l'invention permet très facilement de réaliser cette fonction. Dans ce but, au moins l'un des éléments suivants : le capuchon 80, la deuxième partie de carter 12, la troisième partie de carter 13, la quatrième partie 14 et au moins l'une des roues 4, 5, est en une matière plastique chargée d'un matériau électriquement conducteur comme par exemple des fibres métalliques pour rendre l'élément électriquement conducteur, ce dernier étant relié au sol et au meuble par tout moyen lui aussi électriquement conducteur.

Selon une réalisation avantageuse, ce dernier, comme illustré sur la figure 8, est constitué par le fait que la cage 201 et l'arbre de rotation 6 sont en matériau métallique électriquement conducteur, et que le capuchon 80, la troisième partie de carter 13 et au moins l'une des deux roues 4, 5 sont en une matière plastique chargée de fibres métalliques. En plus, la roulette comporte une pièce de liaison 200 en matériau électriquement conducteur reliant au contact la cage 201 avec la troisième partie de carter 13.

Selon une mode de réalisation préférentiel, la pièce de liaison 200 est constituée d'une bague 202 montée au contact de la cage 201 entre cette cage et la couronne 63, et d'au moins deux première et seconde pattes 203, 204 solidaires de la bague 202 de part et d'autre de celle-ci de façon que la première patte 203 vienne au contact de la cage 201 par la cage extérieure et que la seconde patte 204 vienne au contact de la troisième partie de carter 13 en étant prise en sandwich entre la deuxième partie de carter 12 et cette troisième partie 13, figure 8.

Selon cette dernière réalisation, l'électricité statique qui se charge dans le meuble peut alors être conduite à la masse du sol en suivant le chemin comportant successivement : le capuchon 80 contre lequel vient frotter le meuble, la cage 201 au contact de ce capuchon 80 par sa cage intérieure, la pièce de liaison 200 au contact de la cage 201 au moyen notamment de la bague 202 et des premières pattes 203, la troisième partie de carter 13 (ou l'ensemble E2) au contact des secondes pattes 204 de la pièce de liaison 200, l'arbre 6 qui est au contact de cette troisième partie de carter 13, et au moins l'une des roues 4, 5 en un matériau électriquement conducteur et qui frotte contre l'arbre 6 tout en roulant sur le sol.

## Revendications

1. Roulette pour meuble (M) ou analogue, comportant un carter (1) comprenant un carter de roues (2) définissant un premier axe (8) de rotation des roues, ce dit carter de roues étant destiné à supporter les roues, et un carter de pivot (3) définissant un second axe (9) de pivotement de carter sensiblement perpendiculaire au premier axe (8), deux roues (4, 5) montées en rotation par rapport au carter de roues (2) via un arbre de rotation (6) selon ledit premier axe (8), et des moyens de fixation en rotation (7) du carter de pivot (3) sur le meuble (M),
**caractérisée par le fait que** ledit carter (1) est constitué :
de deux premier et second ensembles (E₁, E₂), chaque ensemble étant réalisé en une seule pièce, ledit premier ensemble (E₁) comportant une première partie (11) constituée d'une partie du carter de roues (2) et une deuxième partie (12) constituée d'une partie du carter de pivot (3), ledit second ensemble (E₂) comportant une troisième partie (13) constituée d'une autre partie du carter de roues (2) et une quatrième partie (14) constituée d'une autre partie du carter de pivot (3), les deux ensembles (E₁, E₂) étant aptes à être associés entre eux pour former le carter (1) de façon que les première et troisième parties (11, 13) s'emboîtent pour former le carter de roues (2) et que les deuxième et quatrième parties (12, 14) s'emboîtent pour former le carter de pivot (3), et
de moyens (15) pour solidariser entre eux les deux dits ensembles (E₁, E₂).

2. Roulette selon la revendication 1, **caractérisée par le fait que** :
la première partie (11) comporte deux première et deuxième parois (21, 22) sensiblement parallèles entre elles en définissant un premier espace (31), ces première et deuxième parois étant sensiblement perpendiculaires au premier axe (8) et parallèles au second axe (9), chacune comportant un orifice (25, 26), les deux dits orifices étant centrés sur ledit premier axe (8) et ayant une section complémentaire de la section transversale de l'arbre de rotation (6), et que
la troisième partie (13) comporte deux troisième et quatrième parois (23, 24) sensiblement parallèles entre elles en définissant un second espace (32), ces troisième et quatrième parois étant sensiblement perpendiculaires au premier axe (8) et parallèles au second axe (9), lesdites troisième et quatrième parois étant agencées pour être enfichées dans le premier espace (31), ces troisième et quatrième parois (23, 24) comportant chacune un orifice (27, 28), ces deux dits orifices étant aptes à être centrés sur ledit premier axe (8) et ayant une section sensiblement complémentaire de la section transversale de l'arbre de rotation (6).

3. Roulette selon l'une des revendications 1 et 2, **caractérisée par le fait que** les deuxième et quatrième parties (12, 14) sont emboîtées l'une dans l'autre suivant ledit second axe (9) via un emboîtement mâle-femelle, la deuxième partie (12) comportant l'élément femelle (40) du dit emboîtement et la quatrième partie (14) comportant l'élément mâle (41).

4. Roulette selon les revendications 1 à 3, **caractérisée par le fait que** les moyens (15) pour solidariser entre eux les deux dits ensembles (E₁, E₂) sont constitués **par le fait que** l'arbre de rotation (6) passe dans les quatre orifices (25-28) et par des moyens (42) pour solidariser entre eux les éléments mâle (41) et femelle (40) de l'emboîtement mâle-femelle entre les deuxième et quatrième parties (12, 14).

5. Roulette selon la revendication 4, **caractérisée par le fait que** les moyens (42) pour solidariser entre eux les éléments mâle (41) et femelle (40) sont constitués par une goupille (43) enfichée dans des trous traversant respectivement les deuxième et quatrième parties (12, 14), ces trous étant coaxiaux quand les deux éléments mâle (41) et femelle (40) sont emboîtés l'un dans l'autre.

6. Roulette selon l'une des revendications 1 à 5, **caractérisée par le fait que** les moyens de fixation (7) du carter de pivot (3) sur le meuble (M), sont constitués par :
deux percées (51, 52) réalisées respectivement dans les deuxième et quatrième parties (12, 14), ces deux percées étant réalisées suivant ledit second axe (9),
• une vis de fixation (45) comportant une tige de vissage (46) et une tête d'épaulement (47) solidaire d'une extrémité de la tige de vissage, ladite vis étant apte à être enfichée dans les deux percées (51, 52) de façon que l'extrémité libre (48) de la tige de vissage (46) émerge au-delà de l'extrémité de la percée (51) réalisée dans la deuxième partie (12) la plus éloignée de la quatrième partie (14), et de façon que la tête d'épaulement (47) soit située dans un alésage (49) réalisé dans la quatrième partie (14) coaxialement à la percée (52) réalisée dans cette quatrième partie, ledit alésage (49) débouchant à l'extrémité de la percée (52) dans la quatrième partie (14) opposée à celle qui est la plus proche de la deuxième partie (12), la profondeur du dit alésage (49) étant supérieure à la hauteur de ladite tête d'épaulement (47), et
• des moyens pour lier en rotation ladite tige de vissage (46) avec ledit carter de pivot (3) formé par l'assemblage des deuxième et quatrième parties (12, 14).

7. Roulette selon la revendication 6, **caractérisée par le fait que** les moyens pour lier en rotation ladite tige de vissage (46) avec ledit carter de pivot (3) formé par l'assemblage des deuxième et quatrième parties (12, 14) comportent des moyens de roulement (55) montés en coopération avec ladite deuxième partie (12), les dits moyens de roulement étant agencés de façon que le carter de pivot (3) soit apte à pivoter librement par rapport à la tige de vissage (46).

8. Roulette selon la revendication 7, **caractérisée par le fait qu'**elle comporte un bouchon (53) d'obturation du dit alésage (49) quand la tête d'épaulement (47) y est positionnée.

9. Roulette selon la revendication 8, **caractérisée par le fait qu'**elle comporte des moyens pour bloquer, d'une part la rotation d'au moins une roue (4, 5) par rapport au carter (1), et d'autre part la rotation du carter par rapport à la vis de fixation (45).

10. Roulette selon la revendication 9, **caractérisée par le fait que** les moyens pour bloquer, d'une part la rotation d'au moins une roue (4, 5) par rapport au carter (1) et d'autre part la rotation du carter par rapport à la vis de fixation (45), comportent :
• des premiers crans (60) réalisés sur la roue (4, 5) à bloquer,
• un premier levier (61) monté rotatif sur ladite première partie (11), une extrémité du dit premier levier (61) comportant des seconds crans (62) complémentaires des premiers crans (60), ledit premier levier étant monté rotatif entre deux première et une seconde positions de façon que, pour une première position, les seconds crans (62) pénètrent dans les premiers crans (60) et que, pour l'autre position, les seconds crans (62) ne coopèrent pas avec les premiers crans (60),
• une couronne (63) comportant des troisièmes crans (64), ladite couronne étant montée en coopération avec la deuxième partie (12) de façon coaxiale avec la percée (51) réalisée dans cette deuxième partie (12) et comportant un orifice central (65) de façon que ladite tige de vissage (46) s'enfiche en y étant fixée dans ce dit orifice central, ladite couronne étant positionnée en coopération avec la deuxième partie (12) entre les moyens de roulement (55) et la tête d'épaulement (47),
• une rondelle d'appui (81) interposée entre ladite couronne (63) et la tête d'épaulement (47),
• un second levier (66), une extrémité du dit-second-levier comportant des quatrièmes crans (67), ce dit second levier (66) étant monté rotatif entre deux première et seconde positions sur ladite troisième partie (13) de façon que, pour une première position, les quatrièmes crans (67) pénètrent dans les troisièmes crans (64), et que, pour la seconde position, les quatrièmes crans (67) ne coopèrent pas avec les troisièmes crans (64),
• des moyens (70) pour commander la rotation des deux leviers (61, 66) entre leurs seconde et première positions respectives, et
• des moyens de rappel commandables des deux leviers, de leur première position vers leur seconde position.

11. Roulette selon les revendications 2 et 10, **caractérisée par le fait que** les moyens (70) pour commander la rotation des premier et second leviers (61, 66) entre leurs seconde et première positions respectives comportent :
• une came (71) monté rotative autour de l'arbre de rotation (6), ladite came étant disposée dans le second espace (32), et
• des moyens (72) pour commander la rotation de ladite came (71) de façon qu'elle commande la rotation des premier et second leviers (61, 66) entre leurs seconde et première positions respectives.

12. Roulette selon l'une des revendications 6 à 11, **caractérisée par le fait qu'**elle comporte en outre un capuchon d'étanchéité (80) constitué d'un couvercle (803) apte à venir en recouvrement du sommet de la deuxième partie (12), d'une partie en saillie (801) sur le couvercle (803) et d'un orifice central (802) traversant le couvercle (803) et la partie en saillie (801), ledit orifice central (803) présentant une section sensiblement égale à la section transversale de la tige de vissage (46).

13. Roulette selon les revendications 7 et 12, **caractérisée par le fait que**, lesdits moyens de roulement (55) comportent une cage (201) constituée de deux cages extérieure et intérieure, ladite cage extérieure étant solidaire de la deuxième partie (12) et la cage intérieure étant traversée par la tige de vissage(46), ledit capuchon (80) comporte :
• un couvercle (803) apte à venir en recouvrement du sommet de la deuxième partie (12),
• une partie en saillie (801) sur le couvercle (803), et
• un orifice central (802) traversant le couvercle (803) et la partie en saillie (801), ledit orifice central (803) ayant une section sensiblement égale à la section transversale de la tige vissage (46) et ladite partie en saillie (801) étant apte à être enfichée en force entre la tige de vissage (46) et la cage intérieure du roulement.

14. Roulette selon la revendication 13, **caractérisée par le fait qu'**au moins l'un des éléments suivants : le capuchon (80), la deuxième partie de carter (12), la troisième partie de carter (13) et au moins l'une des roues (4, 5), est en une matière plastique chargée d'un matériau électriquement conducteur.

15. Roulette selon la revendication 14, **caractérisée par le fait que** ladite cage (201) et l'arbre de rotation(6) sont en matériau métallique électriquement conducteur, le capuchon (80), la troisième partie de carter (13) et au moins l'une des deux roues (4, 5) étant en une matière plastique chargée de fibres métalliques, et qu'elle comporte en outre une pièce de liaison (200) en matériau électriquement conducteur reliant au contact ladite cage (201) avec ladite troisième partie de carter (13).

16. Roulette selon la revendication 15, **caractérisée par le fait que** ladite pièce de liaison (200) est constituée d'une bague (202) montée au contact de ladite cage (201), entre cette cage et ladite couronne (63), et d'au moins deux première et seconde pattes (203, 204) solidaires de ladite bague (202) de part et d'autre de celle-ci de façon que la première patte (203) vienne au contact de la cage (201) et que la seconde patte (204) vienne au contact de la troisième partie de carter (13).

## Claims

1. A castor for a piece of furniture (M) or the like, comprising a casing (1) comprising a wheel casing (2) defining a first axis (8) for rotation of the wheels, said wheel casing serving to support the wheels, and a swivel casing (2) defining a second axis (9) that is substantially perpendicular to the first axis (8) and about which the casing can pivot, two wheels (4, 5) mounted to rotate relative to the wheel casing (2) via a rotary shaft (6) on said first axis (8), and means (7) for fastening the swivel casing (3) to pivot relative to the piece of furniture (M), the castor being **characterized by** the fact that said casing (1) is constituted:
by first and second units (E₁, E₂), each unit being made as a single piece, said first unit (E₁) comprising a first portion (11) constituted by a portion of the wheel casing (2) and a second portion (12) constituted by a portion of the pivot casing (3), said second unit (E₂) comprising a third portion (13) constituted by another portion of the wheel casing (2) and a fourth portion (14) constituted by another portion of the pivot casing (3), the two units (E₁, E₂) being suitable for being associated with each other to form the casing (1) in such a manner that the first and third portions (11, 13) engage mutually to form the wheel casing (2) and the second and fourth portions (12, 14) engage mutually to form the swivel casing (3); and
by means (15) for securing said two units (E₁, E₂) together.

2. A castor according to claim 1, **characterized by** the fact that:
the first portion (11) comprises first and second substantially parallel walls (21, 22) defining a first space (31), the first and second walls being substantially perpendicular to the first axis (8) and parallel to the second axis (9), each having a respective orifice (25, 26), said two orifices being centered on said first axis (8) and being of section that is complementary to the cross-section of the rotary shaft (6); and by the fact that
the third portion (13) comprises third and fourth substantially parallel walls (23, 24) defining between them a second space (32), the third and fourth walls being substantially perpendicular to the first axis (8) and parallel to the second axis (9), said third and fourth walls being arranged to be plugged into the first space (31), each of the third and fourth walls (23, 24) having a respective orifice (27, 28), said two orifices being suitable for being centered on said first axis (8) and having a section that is substantially complementary to the cross-section of the rotary shaft (6).

3. A castor according to claim 1 or claim 2, **characterized by** the fact that the second and fourth portions (12, 14) are engaged one in the other along said second axis (9) via male-female engagement, the second portion (12) including the female element (40) of said engagement and the fourth portion (14) including the male element (41).

4. A castor according to claims 1 to 3, **characterized by** the fact that the means (15) for securing said two units (E₁, E₂) together are constituted by the fact that the rotary shaft (6) passes through the four orifices (25-28), and by means (42) for securing the male and female elements (41, 40) of the male-female engagement together between the second and fourth portions (12, 14).

5. A castor according to claim 4, **characterized by** the fact that the means (42) for securing the male and female elements (41, 40) together are constituted by a pin (43) plugged into through holes respectively in the second and fourth portions (12, 14), said holes being in axial alignment when the male and female elements (41, 40) are engaged one in the other.

6. A castor according to any one of claims 1 to 5, **characterized by** the fact that the means (7) for fastening the swivel casing (3) to the piece of furniture (M) are constituted by :
• two openings (51, 52) formed respectively in the second and fourth portions (12, 14), these two openings being made along said second axis (9);
• a fastener screw (45) comprising a screw-threaded shank (46) and a shoulder head (47) secured to one end of the screw-threaded shank, said screw being suitable for being engaged in the two openings (51, 52) in such a manner that the free end (48) of the screw-threaded shank (46) emerges beyond the end of the opening (51) formed in the second portion (12) that is furthest from the fourth portion (14), and in such a manner that the shoulder head (47) is situated in a bore (49) formed in the fourth portion (14) in axial alignment with the opening (52) formed in the fourth portion, said bore (49) opening out to the end of the opening (52) in the fourth portion (14) opposite from its end that is closest to the second portion (12), the depth of said bore (49) being greater than the height of said shoulder head (47); and
• means for providing a rotary connection between said screw-threaded shank (46) and said swivel casing (3) formed by assembling together the second and fourth portions (12, 14).

7. A castor according to claim 6, **characterized by** the fact that the means for providing a rotary connection between said screw-threaded shank (46) and said swivel casing (3) formed by assembling together the second and fourth portions (12, 14) comprise bearing means (55) mounted to co-operate with said second portion (12), said bearing means being arranged in such a manner that the swivel casing (3) is suitable for pivoting freely relative to the screw-threaded shank (46).

8. A castor according to claim 7, **characterized by** the fact that it includes a plug (53) for closing said bore (49) when the shoulder head (47) is positioned therein.

9. A castor according to claim 8, **characterized by** the fact that it includes means for blocking, firstly rotation of at least one wheel (4, 5) relative to the casing (1), and secondly pivoting of the casing relative to the fastener screw (45).

10. A castor according to claim 9, **characterized by** the fact that the means for blocking, firstly rotation of at least one wheel (4, 5) relative to the casing (1), and secondly pivoting of the casing relative to the fastener screw (45), comprise:
• first teeth (60) formed on the wheel (4, 5) that is to be blocked;
• a first lever (61) mounted to pivot on said first portion (11), one end of said first lever (61) having second teeth (62) complementary to the first teeth (60), said first lever being mounted to pivot between first and second positions in such a manner that, in a first position the second teeth (62) penetrate into the first teeth (60) and, in the other position the second teeth (62) do not co-operate with the first teeth (60);
• a crown ring (63) including third teeth (64), said crown ring being mounted to co-operate with the second portion (12) on the same axis as the opening (51) formed in said second portion (12) and including a central orifice (65) enabling said screw-threaded shank (46) to pass therethrough and to be fastened in said central orifice, said crown ring being positioned to co-operate with the second portion (12) between the bearing means (55) and the shoulder head (47);
• a bearing washer (81) interposed between said crown ring (63) and the shoulder head (47);
• a second lever (66), one end of said second lever having fourth teeth (67), said second lever (66) being mounted to pivot between first and second positions on said third portion (13) in such a manner that, in a first position the fourth teeth (67) penetrate into the third teeth (64) and, in the second position the fourth teeth (67) do not co-operate with the third teeth (64);
• means (70) for causing both levers (61, 66) to pivot between their respective second and first positions; and
• controllable return means for returning both levers from their first position towards their second position.

11. A castor according to claims 2 and 10, **characterized by** the fact that the means (70) for causing the first and second levers (61, 66) to pivot between their respective second and first positions comprise:
• a cam (71) mounted to pivot about the rotary shaft (6), said cam being disposed in the second space (32); and
• means (72) for causing said cam (71) to pivot in such a manner as to cause the first and second levers (61, 66) to pivot between their respective second and first positions.

12. A castor according to any one of claims 6 to 11, **characterized by** the fact that it further comprises a sealing cap (80) constituted by a cover (803) suitable for covering the top of the second portion (12), a projecting portion (801) on the cover (803), and a central orifice (802) passing through the cover (803) and the projecting portion (801), said central orifice (802) presenting a section that is substantially equal to the cross-section of the screw-threaded shank (46).

13. A castor according to claims 7 and 12, **characterized by** the fact that said bearing means (55) comprise a cage (201) constituted by outer and inner cages, said outer cage being secured to the second portion (12) and the inner cage having the screw-threaded shank (46) passing therethrough, said cap (80) comprising:
• a cover (803) suitable for covering the top of the second portion (12);
• a projecting portion (801) on the cover (803); and
• a central orifice (802) passing through the cover (803) and the projecting portion (801), said central orifice (802) being of section that is substantially equal to the cross-section of the screw-threaded shank (46), and said projecting portion (801) being suitable for being engaged as a force-fit between the screw-threaded shank (46) and the inner cage of the bearing.

14. A castor according to claim 13, **characterized by** the fact that at least one of the following elements: the cap (80), the second casing portion (12), the third casing portion (13) and at least one of the wheels (4, 5), is made of a plastics material filled with an electrically conductive material.

15. A castor according to claim 14, **characterized by** the fact that said cage (201) and the rotary shaft (6) are made of an electrically conductive metal material, the cap (80), the third casing portion (13) and at least one of the two wheels (4, 5) being made of a plastics material filled with metal fibers, and that it also includes a connection piece (200) of electrically conductive material contacting and electrically connecting said cage (201) and said third casing portion (13).

16. A castor according to claim 15, **characterized by** the fact that said connection piece (200) is constituted by a ring (202) mounted in contact with said cage (201), between said cage and said crown ring (63), and at least first and second tabs (203, 204) secured to said ring (202) on either side thereof so that the first tab (203) comes into contact with the cage (201) and the second tab (204) comes into contact with the third casing portion (13).

## Patentansprüche

1. Rolle für ein Möbelstück (M) oder dergleichen mit einem Gehäuse (1) mit einem Radgehäuse (2), das eine erste Drehachse (8) der Räder definiert, wobei dieses Radgehäuse die Räder abstützen soll, und einem Schwenkgehäuse (3), das eine zweite Gehäuseschwenkachse (9) definiert, die zur ersten Achse (8) im Wesentlichen senkrecht ist, zwei Rädern (4, 5), die in Bezug auf das Radgehäuse (2) über eine Drehwelle (6) entlang der ersten Achse (8) drehbar angebracht sind, und Mitteln (7) zur drehbaren Befestigung des Schwenkgehäuses (3) am Möbelstück (M),
**dadurch gekennzeichnet, dass** das Gehäuse (1) gebildet ist aus:
zwei Baugruppen, einer ersten und einer zweiten Baugruppe (E₁, E₂), wobei jede Baugruppe aus einem einzigen Stück hergestellt ist, wobei die erste Baugruppe (E₁) einen ersten Teil (11), der aus einem Teil des Radgehäuses (2) besteht, und einen zweiten Teil (12), der aus einem Teil des Schwenkgehäuses (3) besteht, umfasst, wobei die zweite Baugruppe (E₂) einen dritten Teil (13), der aus einem weiteren Teil des Radgehäuses (2) besteht, und einen vierten Teil (14), der aus einem weiteren Teil des Schwenkgehäuses (3) besteht, umfasst, wobei die zwei Baugruppen (E₁, E₂) miteinander verbunden werden können, um das Gehäuse (1) zu bilden, so dass der erste und der dritte Teil (11, 13) ineinander passen, um das Radgehäuse (2) zu bilden, und der zweite und der vierte Teil (12, 14) ineinander passen, um das Schwenkgehäuse (3) zu bilden, und
Mitteln (15) zum festen Verbinden der zwei Baugruppen (E₁, E₂) miteinander.

2. Rolle nach Anspruch 1, **dadurch gekennzeichnet, dass**:
der erste Teil (11) zwei Wände, eine erste und eine zweite Wand (21, 22), umfasst, die im Wesentlichen zueinander parallel sind, wobei sie einen ersten Raum (31) definieren, wobei diese erste und diese zweite Wand im Wesentlichen zur ersten Achse (8) senkrecht und zur zweiten Achse (9) parallel sind, wobei jede eine Öffnung (25, 26) umfasst, wobei die zwei Öffnungen auf der ersten Achse (8) zentriert sind und einen zum Querschnitt der Drehwelle (6) komplementären Querschnitt aufweisen, und dass
der dritte Teil (13) zwei Wände, eine dritte und eine vierte Wand (23, 24), umfasst, die zueinander im Wesentlichen parallel sind, wobei sie einen zweiten Raum (32) definieren, wobei diese dritte und vierte Wand im Wesentlichen zur ersten Achse (8) senkrecht und zur zweiten Achse (9) parallel sind, wobei die dritte und die vierte Wand so angeordnet sind, dass sie in den ersten Raum (31) eingefügt sind, wobei diese dritte und vierte Wand (23, 24) jeweils eine Öffnung (27, 28) umfassen, wobei diese zwei Öffnungen auf der ersten Achse (8) zentriert werden können und einen zum Querschnitt der Drehwelle (6) im Wesentlichen komplementären Querschnitt aufweisen.

3. Rolle nach einem der Ansprüche 1 und 2, **dadurch gekennzeichnet, dass** der zweite und der vierte Teil (12, 14) entlang der zweiten Achse (9) über eine Stecker-Buchsen-Steckverbindung ineinander eingesteckt sind, wobei der zweite Teil (12) das Buchsenelement (40) der Steckverbindung umfasst und der vierte Teil (14) das Steckerelement (41) umfasst.

4. Rolle nach den Ansprüchen 1 bis 3, **dadurch gekennzeichnet, dass** die Mittel (15) zum festen Verbinden der zwei Baugruppen (E₁, E₂) miteinander durch die Tatsache, dass die Drehwelle (6) in den vier Öffnungen (25-28) verläuft, und durch Mittel (42) zum festen Verbinden des Steckerelements (41) und des Buchsenelements (40) der Stecker-Buchsen-Steckverbindung miteinander zwischen dem zweiten und dem vierten Teil (12, 14) gebildet sind.

5. Rolle nach Anspruch 4, **dadurch gekennzeichnet, dass** die Mittel (42) zum festen Verbinden des Steckerelements (41) und des Buchsenelements (40) miteinander aus einem Stift (43) gebildet sind, der in Löcher eingesteckt ist, die den zweiten bzw. den vierten Teil (12, 14) durchqueren, wobei diese Löcher koaxial sind, wenn die zwei Elemente, das Steckerelement (41) und das Buchsenelement (40), ineinander eingesteckt sind.

6. Rolle nach einem der Ansprüche 1 bis 5, **dadurch gekennzeichnet, dass** die Mittel (7) zur Befestigung des Schwenkgehäuses (3) am Möbelstück (M) gebildet sind aus:
• zwei Durchbrüchen (51, 52), die im zweiten bzw. vierten Teil (12, 14) hergestellt sind, wobei diese zwei Durchbrüche entlang der zweiten Achse (9) hergestellt sind,
• einer Befestigungsschraube (45) mit einem Schraubschaft (46) und einem Anschlagkopf (47), der mit einem Ende des Schraubschafts fest verbunden ist, wobei die Schraube in die zwei Durchbrüche (51, 52) eingesteckt werden kann, so dass das freie Ende (48) des Schraubschafts (46) jenseits des Endes des Durchbruchs (51), der im zweiten Teil (12) hergestellt ist, das vom vierten Teil (14) am weitesten entfernt ist, hervorragt, und dass sich der Anschlagkopf (47) in einer Bohrung (49) befindet, die im vierten Teil (14) koaxial zum Durchbruch (52), der in diesem vierten Teil hergestellt ist, hergestellt ist, wobei die Bohrung (49) am Ende des Durchbruchs (52) im vierten Teil (14) gegenüber jenem, das am nächsten zum zweiten Teil (12) liegt, mündet, wobei die Tiefe der Bohrung (49) größer ist als die Höhe des Anschlagkopfs (47), und
• Mittel zum drehbaren Verbinden des Schraubschafts (46) mit dem Schwenkgehäuse (3), das durch die Montage des zweiten und des vierten Teils (12, 14) gebildet wird.

7. Rolle nach Anspruch 6, **dadurch gekennzeichnet, dass** die Mittel zum drehbaren Verbinden des Schraubschafts (46) mit dem Schwenkgehäuse (3), das durch die Montage des zweiten und des vierten Teils (12, 14) gebildet wird, Wälzlagermittel (55) umfassen, die in Zusammenwirkung mit dem zweiten Teil (12) angebracht sind, wobei die Wälzlagermittel so angeordnet sind, dass das Schwenkgehäuse (3) in Bezug auf den Schraubschaft (46) frei schwenken kann.

8. Rolle nach Anspruch 7, **dadurch gekennzeichnet, dass** sie einen Stopfen (53) zum Verschluss der Bohrung (49) umfasst, wenn der Anschlagkopf (47) dort angeordnet ist.

9. Rolle nach Anspruch 8, **dadurch gekennzeichnet, dass** sie Mittel umfasst, um einerseits die Drehung von mindestens einem Rad (4, 5) in Bezug auf das Gehäuse (1) und andererseits die Drehung des Gehäuses in Bezug auf die Befestigungsschraube (45) zu blockieren.

10. Rolle nach Anspruch 9, **dadurch gekennzeichnet, dass** die Mittel zum Blockieren einerseits der Drehung mindestens eines Rades (4, 5) in Bezug auf das Gehäuse (1) und andererseits der Drehung des Gehäuses in Bezug auf die Befestigungsschraube (45) umfassen:
• erste Kerben (60), die am zu blockierenden Rad (4, 5) hergestellt sind,
• einen ersten Hebel (61), der am ersten Teil (11) drehbar angebracht ist, wobei ein Ende des ersten Hebels (61) zu den ersten Kerben (60) komplementäre zweite Kerben (62) umfasst, wobei der erste Hebel zwischen zwei Positionen, einer ersten und einer zweiten Position, drehbar angebracht ist, so dass für eine erste Position die zweiten Kerben (62) in die ersten Kerben (60) eindringen und für die andere Position die zweiten Kerben (62) nicht mit den ersten Kerben (60) zusammenwirken,
• einen Kranz (63), der dritte Kerben (64) umfasst, wobei der Kranz in Zusammenwirkung mit dem zweiten Teil (12) koaxial mit dem Durchbruch (51) angebracht ist, der in diesem zweiten Teil (12) hergestellt ist, und eine zentrale Öffnung (65) umfasst, so dass der Schraubschaft (46) in diese zentrale Öffnung eingesteckt wird, wenn er dort befestigt wird, wobei der Kranz in Zusammenwirkung mit dem zweiten Teil (12) zwischen den Wälzlagermitteln (55) und dem Anschlagkopf (47) angeordnet ist,
• eine Stützscheibe (81), die zwischen den Kranz (63) und den Anschlagkopf (47) eingefügt ist,
• einen zweiten Hebel (66), wobei ein Ende des zweiten Hebels vierte Kerben (67) umfasst, wobei dieser zweite Hebel (66) zwischen zwei Positionen, einer ersten und einer zweiten Position, an dem dritten Teil (13) drehbar angebracht ist, so dass für eine erste Position die vierten Kerben (67) in die dritten Kerben (64) eindringen und dass für die zweite Position die vierten Kerben (67) nicht mit den dritten Kerben (64) zusammenwirken,
• Mittel (70) zum Steuern der Drehung der zwei Hebel (61, 66) zwischen ihrer jeweiligen zweiten und ersten Position, und
• steuerbare Mittel zur Rückstellung der zwei Hebel von ihrer ersten Position in ihre zweite Position.

11. Rolle nach den Ansprüchen 2 und 10, **dadurch gekennzeichnet, dass** die Mittel (70) zum Steuern der Drehung des ersten und des zweiten Hebels (61, 66) zwischen ihrer jeweiligen zweiten und ersten Position umfassen:
• einen Nocken (71) der um die Drehwelle (6) drehbar angebracht ist, wobei der Nocken im zweiten Raum (32) angeordnet ist, und
• Mittel (72) zum Steuern der Drehung des Nockens (71), so dass er die Drehung des ersten und des zweiten Hebels (61, 66) zwischen ihrer jeweiligen zweiten und ersten Position steuert.

12. Rolle nach einem der Ansprüche 6 bis 11, **dadurch gekennzeichnet, dass** sie außerdem eine Dichtungskappe (80) umfasst, die aus einem Deckel (803), der mit dem Scheitelpunkt des zweiten Teils (12) zur Deckung kommen kann, einem vorstehenden Teil (801) am Deckel (803) und einer zentralen Öffnung (802), die den Deckel (803) und den vorstehenden Teil (801) durchquert, gebildet ist, wobei die zentrale Öffnung (803) einen Querschnitt aufweist, der im Wesentlichen gleich dem Querschnitt des Schraubschafts (46) ist.

13. Rolle nach den Ansprüchen 7 und 12, **dadurch gekennzeichnet, dass** die Wälzlagermittel (55) einen Käfig (201) umfassen, der aus zwei Käfigen, einem äußeren und einem inneren Käfig, gebildet ist, wobei der äußere Käfig mit dem zweiten Teil (12) fest verbunden ist und der innere Käfig von dem Schraubschaft (46) durchquert wird, wobei die Kappe (80) umfasst:
• einen Deckel (803), der mit dem Scheitelpunkt des zweiten Teils (12) zur Deckung kommen kann,
• einen vorstehenden Teil (801) am Deckel (803), und
• eine zentrale Öffnung (802), die den Deckel (803) und den vorstehenden Teil (801) durchquert, wobei die zentrale Öffnung (803) einen Querschnitt aufweist, der im Wesentlichen gleich dem Querschnitt des Schraubschafts (46) ist, und der vorstehende Teil (801) kraftvoll zwischen den Schraubschaft (46) und den inneren Käfig des Wälzlagers eingesteckt werden kann.

14. Rolle nach Anspruch 13, **dadurch gekennzeichnet, dass** mindestens eines der folgenden Elemente: die Kappe (80), der zweite Gehäuseteil (12), der dritte Gehäuseteil (13) und mindestens eines der Räder (4, 5) aus einem mit einem elektrisch leitenden Material gefüllten Kunststoff besteht.

15. Rolle nach Anspruch 14, **dadurch gekennzeichnet, dass** der Käfig (201) und die Drehwelle (6) aus elektrisch leitendem Metallmaterial bestehen, wobei die Kappe (80), der dritte Gehäuseteil (13) und mindestens eines der zwei Räder (4, 5) aus einem mit Metallfasern gefüllten Kunststoff bestehen, und dass sie außerdem ein Verbindungsstück (200) aus einem elektrisch leitenden Material umfasst, das den Käfig (201) mit dem dritten Gehäuseteil (13) in Kontakt verbindet.

16. Rolle nach Anspruch 15, **dadurch gekennzeichnet, dass** das Verbindungsstück (200) aus einem Ring (202), der in Kontakt mit dem Käfig (201) zwischen diesem Käfig und dem Kranz (63) angebracht ist, und mindestens zwei Laschen, einer ersten und einer zweiten Lasche (203, 204), die mit dem Ring (202) auf beiden Seiten von diesem fest verbunden sind, gebildet ist, so dass die erste Lasche (203) mit dem Käfig (201) in Kontakt kommt und die zweite Lasche (204) mit dem dritten Gehäuseteil (13) in Kontakt kommt.
